# FASCICULE DE BREVET EUROPEEN

(11) **EP 3 048 032 B1**
(45) Date de publication et mention de la délivrance du brevet: **06.03.2019**
(21) Numéro de dépôt: 16150836.1
(22) Date de dépôt: 12.01.2016
(51) Int. Cl.: B62D 25/20, B60R 21/34

(54) **PARTIE AVANT DE VEHICULE DOTEE D'UN DISPOSITIF DE PROTECTION DES PIETONS**
FRONTTEIL EINES FAHRZEUGS, DAS MIT EINER SCHUTZVORRICHTUNG FÜR FUSSGÄNGER AUSGESTATTET IST
FRONT END OF A VEHICLE PROVIDED WITH A PEDESTRIAN-PROTECTION DEVICE

(30) Priorité: 21.01.2015 FR 1550484
(43) Date de publication de la demande: 27.07.2016
(73) Titulaire: Renault S.A.S., 92100 Boulogne-Billancourt (FR)
(72) Inventeur: DERRIEN, Dominique, 78560 LE PORT MARLY (FR); BIGOT, Anthony, 92140 CLAMART (FR)

(56) Documents cités:
- US-A1- 2012 074 715
- US-B1- 6 439 330

## Description

L'invention se rapporte à une partie avant de véhicule dotée d'un dispositif de protection des piétons.

Sous l'effet d'un choc frontal accidentel d'un véhicule, un piéton est amené à subir une rotation avec généralement pour conséquence un impact de sa tête sur le capot. Afin de diminuer, voire d'éliminer les risques de blessures graves lors d'un tel choc, la partie avant du véhicule est dotée d'un dispositif de protection apte à soulever le capot par sa partie arrière, entre le moment où est détecté le choc frontal dudit véhicule contre ledit piéton, et le moment où la tête va impacter ledit capot. De cette manière, la tête du piéton va venir impacter un capot surélevé, qui sera libre de pouvoir se déformer pour amortir le choc de sa tête contre ledit capot. Ce soulèvement du capot s'effectue au moyen d'une rotation dudit capot autour d'un axe transversal et horizontal situé à la partie avant de celui-ci.

Les parties avant de véhicule dotées d'un dispositif de protection des piétons existent et ont déjà fait l'objet de brevet. On peut, par exemple, citer le brevet FR2833222, qui se rapporte à un dispositif de protection des piétons comprenant un capot et des moyens de rotation avant matérialisés par une serrure unique, implantée sur un axe longitudinal et central du véhicule. Ainsi, lors d'un choc frontal du véhicule avec un piéton, la partie arrière du capot se soulève par l'activation de moyens adaptés, ledit soulèvement se produisant par la mise en rotation du capot autour de la serrure unique placée à l'avant du capot.

Or, sur certains modèles de véhicule, ceux par exemple pour lesquels le capot est allongé et se termine par une partie avant étroite supportant par exemple un logo représentatif de la marque dudit véhicule, il apparait compliqué, voire impossible, d'implanter une serrure unique au niveau de cette partie avant étroite. En effet, lors d'un choc frontal du véhicule, le capot risque de se surélever de façon instable, en se vrillant légèrement autour d'un seul point de rotule avancé et peut ainsi contribuer à provoquer des blessures.

Pour remédier à cette difficulté d'implantation d'une serrure unique, une solution consiste à implanter deux serrures en position symétrique, de part et d'autre d'un axe longitudinal et central dudit véhicule, pour permettre une rotation homogène et fiable du capot autour de deux points de rotules, lors d'un choc frontal du véhicule. Or, l'implantation de deux serrures allonge le processus de fabrication du véhicule, et occasionne des coûts supplémentaires.

Les parties avant de véhicule selon l'invention sont dotées d'un dispositif de protection des piétons qui s'affranchit des inconvénients relevés dans les solutions existantes.

L'invention a pour objet une partie avant de véhicule comprenant une structure, un capot doté d'une serrure, des moyens de soulèvement dudit capot situés à l'arrière de celui-ci, et des moyens de rotation situés à l'avant dudit capot, lesdits moyens de soulèvement étant activés dans le cas d'un choc frontal du véhicule contre un piéton pour permettre audit capot de se soulever par l'intermédiaire d'un pivotement autour des moyens de rotation.

La principale caractéristique d'une partie avant de véhicule selon l'invention est que les moyens de rotation comprennent la serrure et un pion solidaire du capot, ledit pion étant situé de façon symétrique par rapport à la dite serrure de part et d'autre d'un plan vertical et central du véhicule s'étendant selon un axe longitudinal dudit véhicule. De cette manière, grâce à la présence du pion, le capot est en mesure de pivoter, de façon homogène et fiable, autour de deux points de rotule situés à l'avant du capot et constitués par la serrure et par ledit pion. L'implantation du pion évite ainsi d'avoir à implanter une deuxième serrure, qui est une source de coût supplémentaire. Préférentiellement, le pion et la serrure sont alignés selon un axe transversal et sensiblement horizontal du véhicule. Le pion est un élément saillant pouvant revêtir toute forme, et qui est apte à venir au contact d'une zone précise de la structure de la partie avant du véhicule, pour servir de pivot au capot. Il est supposé l'ouverture normale du capot s'effectue par l'avant, au moyen d'une rotation dudit capot autour d'un axe transversal et horizontal situé à l'arrière de celui-ci. Il est supposé que les moyens de soulèvement possèdent leurs propres sources d'activation.

Avantageusement, une partie avant de véhicule selon l'invention, comprend un crochet de sécurité solidaire du capot, le pion étant implanté au niveau dudit crochet. Ce crochet est présent sur la plupart des véhicules et garantit une position fermée du capot en cas d'une défaillance de la serrure. Une fois que la serrure a été déverrouillée, il suffit de déplacer le crochet pour pouvoir ouvrir le capot. Pour cette configuration, les deux points de rotule du capot lors d'un choc frontal du véhicule contre un piéton, sont situés au niveau de la serrure et du crochet, qui sont deux éléments déjà existants sous le capot. Le pion se retrouve ainsi à proximité du crochet, et préférentiellement à quelques centimètres seulement de celui-ci.

De façon préférentielle, un fil de gâche solidaire du capot coopère avec la serrure qui est solidaire de la structure. Dans cette configuration, la serrure assure une position de fermeture du capot.

Préférentiellement, la structure comprend une cavité située en vis-à-vis du pion lorsque le capot est fermé, le pion venant au contact de ladite cavité dans le cas d'un choc frontal du véhicule. De cette manière, le contact du pion avec la cavité constitue l'un des deux points d'articulation autour desquels le capot va pivoter pour se soulever à sa partie arrière. Avantageusement, la cavité est de petite dimension par rapport aux dimensions du pion pour éviter audit pion de pouvoir se déplacer significativement dans ladite cavité et rendre instable le soulèvement du capot.

De façon avantageuse, la serrure et le pion sont alignés selon un axe transversal du véhicule, qui est situé en retrait du bord transversal le plus en avant du capot.

Avantageusement, le pion est allongé et de forme cylindrique. Il est donc plus facile et plus rapide à fabriquer.

De façon préférentielle, les moyens de soulèvement du capot comprennent au moins un airbag.

Préférentiellement, les moyens de soulèvement comprennent au moins une charnière.

De façon avantageuse, les moyens de soulèvement ont une source d'activation à choisir parmi une source pyrotechnique, une source mécanique et une source pneumatique.

L'invention a également pour objet, un procédé de soulèvement d'un capot d'une partie avant de véhicule conforme à l'invention, lors d'un choc frontal accidentel dudit véhicule contre un piéton.

La principale caractéristique d'un procédé selon l'invention, est qu'il comprend les étapes suivantes,
- une étape de détection du choc,
- une étape d'activation des moyens de soulèvement pour surélever le capot,
- une étape de mise au contact du pion solidaire du capot avec la cavité de la structure,
- une étape de rotation du capot autour des deux points de rotule constitués par ledit pion et la serrure, pour permettre le soulèvement du capot au niveau par sa partie arrière.

Une partie avant de véhicule selon l'invention présente l'avantage d'être moins onéreuse et plus légère qu'une partie avant impliquant deux serrures. Elle a de plus l'avantage de pouvoir être de n'importe quelle longueur, car la position de la serrure et du pion peut facilement et simplement s'adapter à cette longueur. Elle présente également l'avantage de mettre en oeuvre des mécanismes simplifiés par rapport à une partie avant de véhicule impliquant deux serrures.

On donne, ci-après, une description détaillée d'un mode de réalisation préféré d'une partie avant de véhicule selon l'invention, en se référant aux figures 1 à 4.
- La figure 1 est une en perspective d'un véhicule automobile montrant l'emplacement du plan Y0,
- La figure 2 est une vue simplifiée du dessus d'une partie avant de véhicule selon l'invention,
- La figure 3 est une vue schématique de coté de la partie avant d'un véhicule selon l'invention,
- La figure 4 est une vue agrandie et détaillée de la partie avant d'un véhicule selon l'invention montrant une serrure de capot et un crochet de sécurité.

La description détaillée s'effectue par rapport à un référentiel lié au véhicule et pour lequel l'axe X est un axe longitudinal du véhicule orienté vers l'arrière, l'axe Y est un axe transversal du véhicule orienté vers la gauche et l'axe Z est un axe vertical orienté vers le haut.

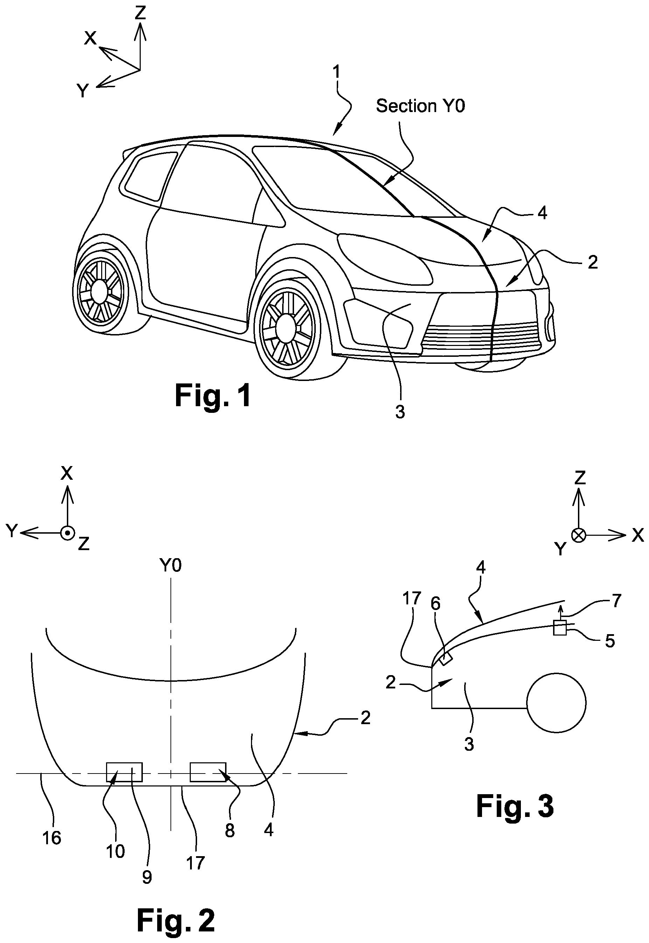

En se référant à la figure 1, Y0 est une ligne matérialisant un plan vertical et longitudinal XZ passant par un axe longitudinal et central d'un véhicule automobile 1. Autrement dit, Y0 représente un plan de symétrie dudit véhicule automobile 1 s'étendant selon une direction longitudinale de ce véhicule.

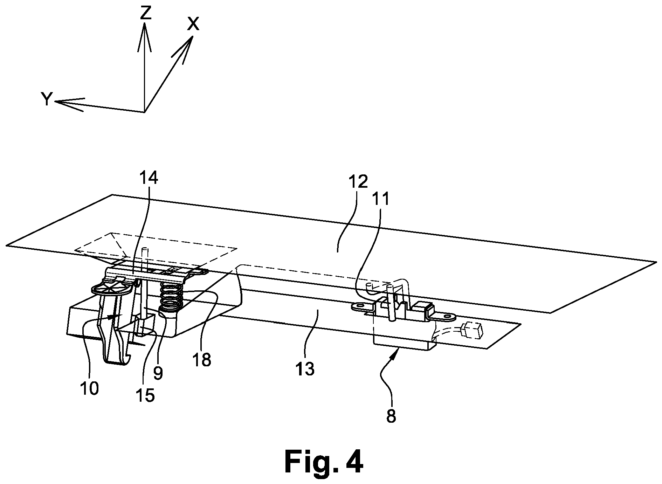

En se référant aux figures 1 et 4, une partie avant 2 d'un véhicule automobile 1 selon l'invention, comprend une structure 3 principale et un capot 4 délimitant un compartiment avant, réservé à l'implantation d'un groupe motopropulseur du véhicule. Schématiquement, ce capot 4 est monté en rotation sur le véhicule, autour d'un axe transversal et horizontal situé au niveau d'une partie arrière dudit capot 4. Ledit capot 4 possède des moyens de fermeture située au niveau de sa partie avant, lui permettant de demeurer au contact de la structure 3. Pour ouvrir le capot 4, il suffit de déverrouiller les moyens de fermeture puis de faire pivoter ledit capot 4 jusqu'à ce qu'il vienne se figer dans une position d'ouverture maximale.

En se référant aux figures 2, 3, 4 une partie avant 2 de véhicule automobile selon l'invention, est dotée d'un dispositif de protection d'un piéton, dans le cas d'un choc frontal accidentel dudit véhicule avec ledit piéton. En effet, dans le cas d'un tel choc, le piéton est amené à subir une rotation avec généralement pour conséquence un impact de sa tête sur le capot. Puisque le capot 4 affleure toutes les pièces constitutives du groupe motopropulseur, l'impact de la tête du piéton contre le capot 4 peut entrainer des blessures graves. Afin de minimiser les effets d'un impact de tête contre le capot 4 en position fermée, le dispositif de protection consiste à surélever de quelques centimètres ledit capot 4 entre le moment où le véhicule percute accidentellement le piéton et le moment où sa tête entre en contact avec ledit capot 4. De cette manière, le capot 4 n'est plus contraint par les pièces constitutives du groupe motopropulseur, et peut donc facilement se déformer pour amortir le choc de la tête du piéton.

Ce dispositif de protection comprend des moyens 5 de soulèvement actifs situés au niveau d'une zone arrière du capot 4 et des moyens 6 de rotation placés au niveau d'une zone avant dudit capot 4. Lesdits moyens 5 de soulèvement actifs possèdent leur propre source d'activation, qui peut par exemple, être d'origine pyrotechnique, mécanique ou pneumatique. Ces moyens de soulèvement 5 peuvent par exemple comprendre des charnières et ou un airbag. L'objet de ces moyens 5 de soulèvement est de provoquer une brusque surélévation du capot 4, comme l'indique la flèche 7 de la figure 3, dès qu'un choc frontal du véhicule contre un piéton a été détecté par un capteur embarqué.

En se référant aux figures 2 et 4 les moyens 6 de rotation du capot 4 permettent audit capot 4 de se soulever au niveau de sa partie arrière grâce aux moyens 5 de soulèvement, par un mouvement de rotation autour desdits moyens 6 de rotation. Ces moyens 6 de rotation comprennent deux points de rotule, l'un constitué par une serrure 8 de verrouillage du capot 4, et l'autre par un pion 9 implanté au niveau d'un crochet 10 de sécurité. La serrure 8 et le crochet 10 de sécurité constituent les moyens de fermeture du capot 4 évoqués ci-avant, et sont donc généralement déjà présents dans le véhicule. L'ouverture dudit capot 4 s'effectue au moyen d'un déverrouillage de la serrure 8 commandé depuis l'habitacle dudit véhicule, puis d'un déplacement manuel du crochet 10 de sécurité, afin de libérer le capot 4.

En se référant à la figure 4, un fil de gâche 11 solidaire d'une doublure 12 du capot 4 est engagé dans la serrure 8 qui est solidaire d'un élément 13 de la structure 3 de la partie avant 2 du véhicule. Le crochet 10 de sécurité est porté par une platine 14 qui est solidaire de la doublure 12 du capot 4, ledit crochet étant associé à un ressort 18. Le pion 9, qui est assimilable à une tige cylindrique allongée, est solidaire de la doublure 12 du capot 4 et passe à travers la platine 14. L'élément 13 de structure 3 comprend une cavité 15 destinée à accueillir le pion 9. Le pion 9 et le crochet 10 sont supposés être implantés au même endroit du capot 4, en n'étant séparés l'un de l'autre que de quelques centimètres au maximum.

Comme le montre la figure 2, le pion 9 et la serrure 8 sont alignés selon un axe transversal et horizontal 16 du véhicule, qui est situé en retrait du bord transversal 17 le plus avancé du capot 4. Ledit pion 9 et ladite serrure 8 sont symétriques l'un par rapport à l'autre, de part et d'autre de la ligne Y0.

Lorsque le capot 4 est fermé, le fil de gâche 11 coopère avec la serrure 8. Le crochet 10 de sécurité est libre par rapport à l'élément 13 de structure 3. Le ressort 18 associé au crochet 10 est en appui sur ledit élément 13 et le pion 9 est libre dans la cavité 15.

En se référant aux figures 3 et 4, lorsqu'un choc frontal du véhicule 1 contre un piéton est détecté, un signal est envoyé à la source d'activation des moyens 5 de soulèvement, qui aussitôt se déclenchent pour soulever le capot 4. Simultanément, le pion 9 vient au contact de la cavité 15, et le capot 4 peut alors pivoter autour des deux points de rotule, constitués par la serrure 8 retenant le fil de gâche 11, et par ledit pion 9 au contact de la cavité 15 pour permettre le soulèvement du capot par pivotement.

Comme l'indique la figure 3, le soulèvement du capot 4 permet à celui-ci de s'éloigner des différentes pièces constitutives du groupe motopropulseur logées dans la structure 3 de la partie avant 2 du véhicule. De cette manière, si malencontreusement la tête du piéton était amenée à heurter le capot 4, celui-ci pourrait alors facilement se déformer pour absorber le choc et ainsi minimiser, voire annuler, les blessures dudit piéton.

## Revendications

1. Partie avant (2) de véhicule (1) comprenant une structure (3), un capot (4) doté d'une serrure (8), des moyens (5) de soulèvement dudit capot (4) situés à l'arrière de celui-ci, et des moyens (6) de rotation situés à l'avant dudit capot (4), lesdits moyens (5) de soulèvement étant activés dans le cas d'un choc frontal du véhicule contre un piéton pour permettre audit capot (4) de se soulever par l'intermédiaire d'un pivotement autour des moyens (6) de rotation, **caractérisée en ce que** les moyens (6) de rotation comprennent la serrure (8) et un pion (9) solidaire du capot (4), et **en ce que** ledit pion (9) est situé de façon symétrique par rapport à la dite serrure (8) de part et d'autre d'un plan vertical et central du véhicule (1) s'étendant selon un axe longitudinal dudit véhicule.

2. Partie avant de véhicule selon la revendication 1, **caractérisée en ce qu'**elle comprend un crochet (10) de sécurité solidaire du capot (4), et **en ce que** le pion (9) est implanté au niveau dudit crochet (10).

3. Partie avant de véhicule selon l'une quelconque des revendications 1 ou 2, **caractérisée en ce qu'**un fil (11) de gâche solidaire du capot (4) coopère avec la serrure (8) qui est solidaire de la structure (3).

4. Partie avant de véhicule selon l'une quelconque des revendications 1 à 3, **caractérisée en ce que** la structure (3, 13) comprend une cavité (15) située en vis-à-vis du pion (9) lorsque le capot (4) est fermé, et **en ce que** le pion (9) vient au contact de ladite cavité (15) dans le cas d'un choc frontal du véhicule.

5. Partie avant de véhicule selon l'une des revendications 1 à 4, **caractérisée en ce que** la serrure (8) et le pion (9) sont alignés selon un axe transversal (16) du véhicule qui est situé en retrait du bord (17) le plus en avant du capot (4).

6. Partie avant de véhicule selon l'une quelconque des revendications 1 à 5, **caractérisée en ce que** le pion (9) est allongé et de forme cylindrique.

7. Partie avant de véhicule selon l'une quelconque des revendications 1 à 6, **caractérisée en ce que** les moyens (5) de soulèvement du capot (4) comprennent au moins un airbag.

8. Partie avant de véhicule selon l'une quelconque des revendications 1 à 7, **caractérisée en ce que** les moyens (5) de soulèvement comprennent au moins une charnière.

9. Partie de véhicule selon l'une quelconque des revendications 1 à 8, **caractérisée en ce que** les moyens (5) de soulèvement ont une source d'activation à choisir parmi une source pyrotechnique, une source mécanique et une source pneumatique.

10. Procédé de soulèvement d'un capot (4) d'une partie avant (2) de véhicule (2) conforme à l'une quelconque des revendications 1 à 9 lors d'un choc frontal accidentel dudit véhicule contre un piéton, **caractérisé en ce qu'**il comprend les étapes suivantes,
- une étape de détection du choc,
- une étape d'activation des moyens (5) de soulèvement pour surélever le capot (4),
- une étape de mise au contact du pion (9) solidaire du capot (4) avec la cavité (15) de la structure (3, 13),
- une étape de rotation du capot (4) autour des deux points de rotule constitués par ledit pion (9) et la serrure (8), pour permettre le soulèvement du capot (4) par sa partie arrière.

## Patentansprüche

1. Vorderteil (2) eines Fahrzeugs (1), der eine Struktur (3), eine Motorhaube (4) mit einem Verschluss (8), Mittel (5) zum Anheben der Motorhaube (4), die sich hinten an dieser befinden, und Drehmittel (6), die sich vorn an der Motorhaube (4) befinden, umfasst, wobei die Anhebemittel (5) im Falle eines Frontalzusammenstoßes des Fahrzeugs mit einem Fußgänger aktiviert werden, um zu ermöglichen, dass sich die Motorhaube (4) durch eine Schwenkung um die Drehmittel (6) hebt, **dadurch gekennzeichnet, dass** die Drehmittel (6) den Verschluss (8) und einen mit der Motorhaube (4) fest verbundenen Bolzen (9) umfassen, und dadurch, dass der Bolzen (9) symmetrisch in Bezug auf den Verschluss (8) beiderseits einer vertikalen Mittelebene des Fahrzeugs (1) angeordnet ist, die sich entlang einer Längsachse des Fahrzeugs erstreckt.

2. Vorderteil eines Fahrzeugs nach Anspruch 1, **dadurch gekennzeichnet, dass** er einen Sicherungshaken (10) umfasst, der mit der Motorhaube (4) fest verbunden ist, und dadurch, dass der Bolzen (9) im Bereich des Hakens (10) angebracht ist.

3. Vorderteil eines Fahrzeugs nach einem der Ansprüche 1 oder 2, **dadurch gekennzeichnet, dass** ein Drahtschließbügel (11), der mit der Motorhaube (4) fest verbunden ist, mit dem Verschluss (8) zusammenwirkt, welcher mit der Struktur (3) fest verbunden ist.

4. Vorderteil eines Fahrzeugs nach einem der Ansprüche 1 bis 3, **dadurch gekennzeichnet, dass** die Struktur (3, 13) einen Hohlraum (15) umfasst, der sich gegenüber dem Bolzen (9) befindet, wenn die Motorhaube (4) geschlossen ist, und dadurch, dass der Bolzen (9) im Falle eines Frontalzusammenstoßes des Fahrzeugs mit dem Hohlraum (15) in Kontakt kommt.

5. Vorderteil eines Fahrzeugs nach einem der Ansprüche 1 bis 4, **dadurch gekennzeichnet, dass** der Verschluss (8) und der Bolzen (9) entlang einer Querachse (16) des Fahrzeugs ausgerichtet sind, welche hinter dem vordersten Rand (17) der Motorhaube (4) verläuft.

6. Vorderteil eines Fahrzeugs nach einem der Ansprüche 1 bis 5, **dadurch gekennzeichnet, dass** der Bolzen (9) lang gestreckt und von zylindrischer Form ist.

7. Vorderteil eines Fahrzeugs nach einem der Ansprüche 1 bis 6, **dadurch gekennzeichnet, dass** die Mittel (5) zum Anheben der Motorhaube (4) wenigstens einen Airbag umfassen.

8. Vorderteil eines Fahrzeugs nach einem der Ansprüche 1 bis 7, **dadurch gekennzeichnet, dass** die Mittel (5) zum Anheben wenigstens ein Scharnier umfassen.

9. Vorderteil eines Fahrzeugs nach einem der Ansprüche 1 bis 8, **dadurch gekennzeichnet, dass** die Mittel (5) zum Anheben eine Aktivierungsquelle aufweisen, die aus einer pyrotechnischen Quelle, einer mechanischen Quelle und einer pneumatischen Quelle ausgewählt ist.

10. Verfahren zum Anheben einer Motorhaube (4) eines Vorderteils (2) eines Fahrzeugs (2) nach einem der Ansprüche 1 bis 9 bei einem Frontalzusammenstoß des Fahrzeugs mit einem Fußgänger, **dadurch gekennzeichnet, dass** es die folgenden Schritte umfasst:
- einen Schritt der Erkennung des Zusammenstoßes,
- einen Schritt der Aktivierung der Anhebemittel (5), um die Motorhaube (4) anzuheben,
- einen Schritt des Inkontaktbringens des Bolzens (9), der mit der Motorhaube (4) fest verbunden ist, mit dem Hohlraum (15) der Struktur (3, 13),
- einen Schritt der Drehung der Motorhaube (4) um die zwei Kugelgelenkpunkte, die aus dem Bolzen (9) und dem Verschluss (8) bestehen, um das Anheben der Motorhaube (4) an ihrem hinteren Teil zu ermöglichen.

## Claims

1. Front end (2) of a vehicle (1) comprising a structure (3), a bonnet (4) equipped with a lock (8), means (5) for lifting the said bonnet (4) which are situated at the rear thereof, and rotation means (6) situated at the front of the said bonnet (4), these said lifting means (5) being activated in the event of a frontal impact of the vehicle against a pedestrian to allow the said bonnet (4) to lift by means of a pivoting movement about rotation means (6), **characterized in that** the rotation means (6) comprise the lock (8) and a pin (9) secured to the bonnet (4), and **in that** the said pin (9) is situated symmetrically with respect to the said lock (8) on either side of a central vertical plane of the vehicle (1) extending along a longitudinal axis of the said vehicle.

2. Vehicle front end according to Claim 1, **characterized in that** it comprises a safety hook (10) secured to the bonnet (4), and **in that** the pin (9) is installed at the level of the said hook (10).

3. Vehicle front end according to either one of Claims 1 and 2, **characterized in that** a striker wire (11) secured to the bonnet (4) cooperates with the lock (8) which is secured to the structure (3).

4. Vehicle front end according to any one of Claims 1 to 3, **characterized in that** the structure (3, 13) comprises a cavity (15) situated opposite the pin (9) when the bonnet (4) is closed, and **in that** the pin (9) comes into contact with the said cavity (15) in the event of a frontal impact of the vehicle.

5. Vehicle front end according to one of Claims 1 to 4, **characterized in that** the lock (8) and the pin (9) are aligned along a transverse axis (16) of the vehicle which is situated set back from the foremost edge (17) of the bonnet (4).

6. Vehicle front end according to any one of Claims 1 to 5, **characterized in that** the pin (9) is elongate and of cylindrical shape.

7. Vehicle front end according to any one of Claims 1 to 6, **characterized in that** the means (5) for lifting the bonnet (4) comprise at least one airbag.

8. Vehicle front end according to any one of Claims 1 to 7, **characterized in that** the lifting means (5) comprise at least one hinge.

9. Vehicle front end according to any one of Claims 1 to 8, **characterized in that** the lifting means (5) have an activation source to be chosen from a pyrotechnic source, a mechanical source and a pneumatic source.

10. Method for lifting a bonnet (4) of a front end (2) of a vehicle (2) according to any one of Claims 1 to 9 during an accidental frontal impact of the said vehicle against a pedestrian, **characterized in that** it comprises the following steps:
- a step of detecting the impact,
- a step of activating the lifting means (5) to raise the bonnet (4),
- a step of bringing the pin (9) secured to the bonnet (4) into contact with the cavity (15) of the structure (3, 13),
- a step of rotating the bonnet (4) about two ball points formed by the said pin (9) and the lock (8) in order to allow the bonnet (4) to be lifted by its rear portion.
